(19) Europäisches Patentamt / European Patent Office / Office européen des brevets

(11) EP 3 556 800 A1

(12) **EUROPEAN PATENT APPLICATION**
published in accordance with Art. 153(4) EPC

(43) Date of publication:
**23.10.2019 Bulletin 2019/43**

(51) Int Cl.:
**C08J 5/24** (2006.01)

(21) Application number: **17881785.4**

(86) International application number:
**PCT/JP2017/043949**

(22) Date of filing: **07.12.2017**

(87) International publication number:
**WO 2018/110404 (21.06.2018 Gazette 2018/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **15.12.2016 JP 2016243033**
**15.12.2016 JP 2016243034**

(71) Applicant: **Toray Industries, Inc.**
**Tokyo 103-8666 (JP)**

(72) Inventors:
• **HOSOKAWA Naofumi**
**Nagoya-shi**
**Aichi 455-8502 (JP)**
• **YAMASAKI Masaaki**
**Otsu-shi**
**Shiga 520-8558 (JP)**

(74) Representative: **Hoefer & Partner Patentanwälte mbB**
**Pilgersheimer Straße 20**
**81543 München (DE)**

(54) **FIBER-REINFORCED PREPREG, TAPE AND WOUND BODY OF FIBER-REINFORCED PREPREG, AND METHOD FOR PRODUCING FIBER-REINFORCED PREPREG AND FIBER-REINFORCED PREPREG TAPE**

(57)    Provided are: a reinforcing fiber prepreg having a thermosetting resin as a matrix, wherein a part of the reinforcing fiber prepreg is a low-adhesion region that has been treated to reduce adhesiveness, and the resin reaction rate of the low-adhesion region is preferably 0.1%-20%; a tape and a wound body obtained from the reinforcing fiber prepreg; and methods for producing the reinforcing fiber prepreg and reinforcing fiber prepreg tape. This makes it possible to provide a reinforcing fiber prepreg tape of which the adhesiveness is appropriately reduced to enable suitable application to conveyance for AFP while using a simple technology.

**FIG. 2**

EP 3 556 800 A1

**Description**

Technical Field of the Invention

The present invention relates to a reinforcing fiber prepreg, a tape and a wound body of the reinforcing fiber prepreg, and methods for producing a reinforcing fiber prepreg and a reinforcing fiber prepreg tape.

Background Art of the Invention

A reinforcing fiber prepreg using carbon fibers, aramid fibers, glass fibers, etc. as reinforcing fibers is utilized as a raw material for structural materials of aircraft, automobiles, or the like, sports goods or general industrial applications, by making use of its high specific strength/specific elastic modulus. In particular, in the aircraft industry, it is widely utilized for the purpose of fuel saving and reduction of operation cost.
When manufacturing these aircraft members, AFP (Automatic Fiber Placement) technology is utilized. AFP is a technology of automatically placing narrow width tapes comprising fibers and resin in appropriate places and laminating them.
It is necessary to convey the tape used in the AFP technology so as not to adhere to a contact portion with a guide roll or the like in the device.
As a technology for reducing the adhesiveness of the reinforcing fiber prepreg with contact portion of the device, known is a method for reducing the adhesiveness of reinforcing fiber prepreg by cooling the reinforcing fiber prepreg to be supplied when laminating reinforcing fiber prepregs to each other (for example, Patent document 1). In the technology disclosed in Patent document 1, by providing a cooling chamber stored with a reinforcing fiber prepreg to be supplied, it is possible to avoid adhesion at the contact portion in the lamination device and smoothly perform the supply and conveyance of the reinforcing fiber prepreg.
Further, as another technology for reducing the adhesiveness of the reinforcing fiber prepreg, known is a method for reducing the adhesiveness of the reinforcing fiber prepreg by hastening the curing of the resin to make it into a semi-cured reinforcing fiber prepreg (for example, Patent document 2). In the technology disclosed in Patent document 2, the adhesiveness can be reduced by curing the matrix resin composition contained in the reinforcing fiber prepreg until the resin reaction rate thereof reaches to 20% to 70% to obtain a semi-cured prepreg.

Prior art documents

Patent documents

Patent document 1: JP-A-2008-30296
Patent document 2: JP-A-2016-155915

Summary of the Invention

Problems to be solved by the Invention

However, in the method of performing cooling disclosed in Patent document 1, there is a problem that a cooling device and cooling energy are necessary, thereby causing an increase in cost.
Further, in the method of reducing the adhesiveness of the reinforcing fiber prepreg by semi-curing of the resin disclosed in Patent document 2, there is a problem that it is impossible to obtain necessary adhesiveness at the time of lamination of the reinforcing fiber prepreg and therefore it cannot be applied to AFP.
Accordingly, an object of the present invention is to provide a reinforcing fiber prepreg which can be suitably applied to conveyance in AFP, while using a simple technology, a tape and a wound body using the reinforcing fiber prepreg, and a method for producing the reinforcing fiber prepreg and a method for producing a reinforcing fiber prepreg tape.

Means for solving the Problems

In order to achieve the above-described objects, the following constitution is employed in the present invention. Namely,

[1] A reinforcing fiber prepreg having a thermosetting resin as a matrix, wherein a part of the reinforcing fiber prepreg is a low-adhesion region to which an adhesiveness reduction treatment has been applied.

[2] The reinforcing fiber prepreg according to [1], wherein a resin reaction rate of the low-adhesion region is 0.1% to 20%.

[3] The reinforcing fiber prepreg according to [1] or [2], wherein the adhesiveness reduction treatment is at least one of heat treatment, plasma irradiation treatment and UV irradiation treatment.

[4] The reinforcing fiber prepreg according to any one of [1] to [3], wherein a surface of the reinforcing fiber prepreg or the periphery of the surface is the low-adhesion region.

[5] The reinforcing fiber prepreg according to any one of [1] to [4], wherein an end surface of the reinforcing fiber prepreg is the low-adhesion region.

[6] A reinforcing fiber prepreg tape cut along the low-adhesion region provided in the reinforcing fiber prepreg according to any one of [1] to [5].

[7] A reinforcing fiber prepreg tape using a thermosetting resin as a matrix, wherein a cross-sectional area of both end portions each occupying a region entered from each end by 10% of a maximum width in a cross section perpendicular to the longitudinal direction of the reinforcing fiber prepreg tape is less than 15% of the entire cross-sectional area of the cross section perpendicular to the longitudinal direction of the reinforcing fiber prepreg tape.

[8] The reinforcing fiber prepreg tape according to [7] cut along the low-adhesion region provided in the reinforcing fiber prepreg according to any one of claims [1] to [5].

[9] A wound body of a reinforcing fiber prepreg having a thermosetting resin as a matrix, wherein at least a part of the reinforcing fiber prepreg has a low-adhesion region to which an adhesiveness reduction treatment has been applied, and the reinforcing fiber prepreg is subsequently wound directly onto an outer layer of the reinforcing fiber prepreg which has been wound previously.

[10] A method for producing a reinforcing fiber prepreg comprising a step of forming at least a part of a reinforcing fiber prepreg having a thermosetting resin as a matrix into a low-adhesion region by at least one adhesiveness reduction treatment selected from the group consisting of heat treatment, plasma irradiation treatment and UV irradiation treatment.

[11] The method for producing a reinforcing fiber prepreg according to [10], wherein the low-adhesion region is formed at a surface of the reinforcing fiber prepreg or the periphery of the surface.

[12] A method for producing a reinforcing fiber prepreg tape comprising a step of cutting the tape along the low-adhesion region of a reinforcing fiber prepreg obtained by the production method according to [10] or [11].

Effect according to the Invention

According to the present invention, it is possible to provide a reinforcing fiber prepreg tape in which the adhesiveness is appropriately reduced which can suitably be applied especially to the conveyance of AFP, while using a simple technology.

Brief explanation of the drawings

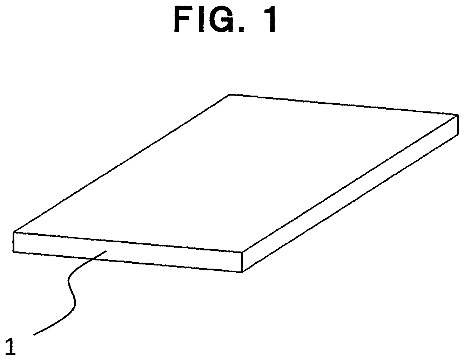

Fig. 1 is a schematic perspective view of a reinforcing fiber prepreg according to an embodiment of the present invention.

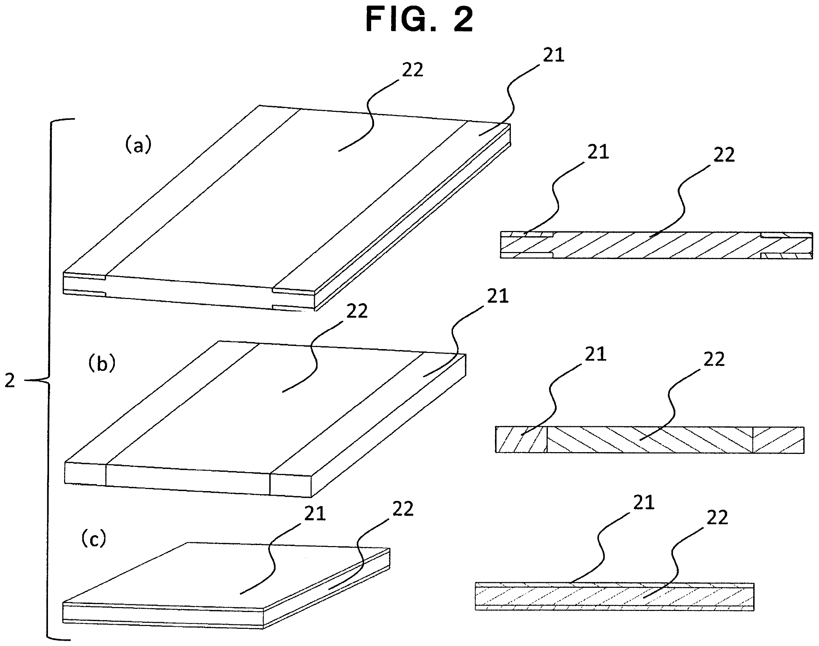

Fig. 2 shows schematic perspective views and schematic sectional views of reinforcing fiber prepregs according to the present invention, each in which a part of the reinforcing fiber prepreg is a low-adhesion region to which an adhesiveness reduction treatment has been applied, and shows (a) a reinforcing fiber prepreg formed with a low-adhesion region on upper and lower surfaces of its end portion, (b) a reinforcing fiber prepreg formed with a low-adhesion region on its end surfaces, and (c) a reinforcing fiber prepreg formed with a low-adhesion region on its upper and lower surfaces, respectively.

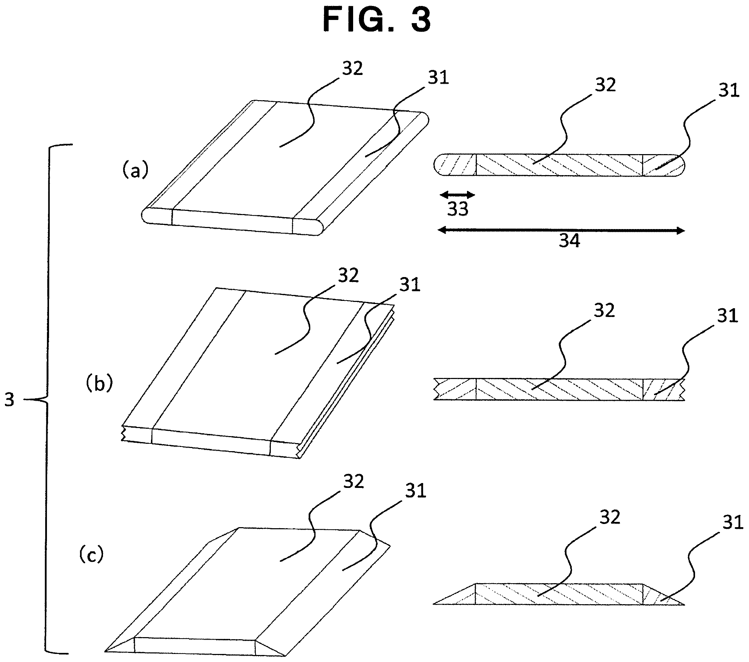

Fig. 3 shows schematic perspective views and schematic sectional views of reinforcing fiber prepregs according to embodiments of the present invention, each in which the shape of an end portion of a reinforcing fiber prepreg is smaller than an ordinary part, and shows (a) a reinforcing fiber prepreg with an end portion having an elliptical shape, (b) a reinforcing fiber prepreg with an end portion having a $\Sigma$-shape, and (c) a reinforcing fiber prepreg with an end portion having a $\Delta$ shape, respectively.

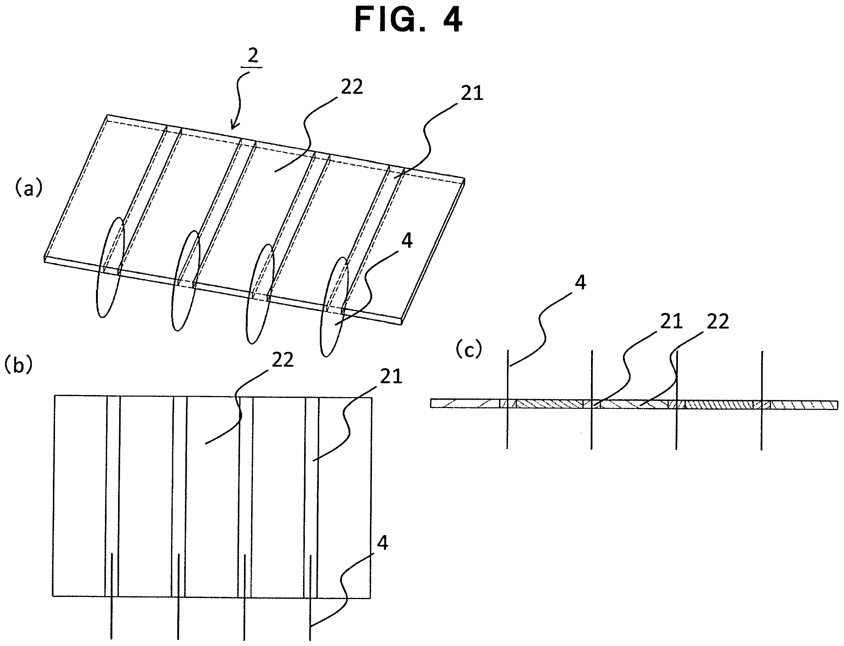

Fig. 4 shows schematic diagrams showing a method for producing a reinforcing fiber prepreg tape for cutting the tape along a low-adhesion region of a reinforcing fiber prepreg according to an embodiment of the present invention, and shows (a) a schematic perspective view, (b) a schematic plan view, and (c) a schematic front sectional view, respectively.

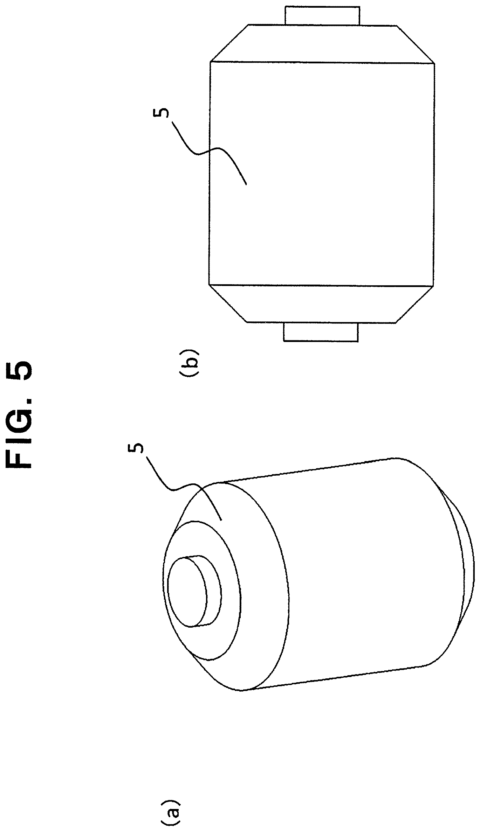

Fig. 5 shows schematic diagrams of a wound body of a reinforcing fiber prepreg according to an embodiment of the present invention, and shows (a) a schematic perspective view, and (b) a schematic elevational view, respectively.

Embodiments for carrying out the Invention

Hereinafter, desirable embodiments of the present invention will be explained referring to figures. However, the following embodiments are merely examples of desirable embodiments of the present invention, and the present invention is not limited to these embodiments.

Fig. 1 is a schematic perspective view of a reinforcing fiber prepreg 1 according to an embodiment of the present invention. The reinforcing fiber prepreg 1 is composed of reinforcing fibers and a matrix resin.

In Fig. 1, although a reinforcing fiber prepreg 1 comparatively short in the depth direction is illustrated, when applied to an AFP apparatus, it is necessary to have a width that can be introduced into an AFP apparatus with respect to width, for example, 1. 5 inch width, 1 inch width, 1/2 inch width, 1/4 inch width, and 1/8 inch width can be exemplified. In the depth direction, a certain length is required, and it may be wound in a spool or reel shape.

As the reinforcing fibers, although not particularly limited, for example, it is preferred to use carbon fibers, glass fibers, aramid fibers, Kevlar fibers or the like. As the forms of reinforcing fiber base materials, for example, a woven fabric, a knitted fabric, a nonwoven fabric, a unidirectional reinforcing fiber base material and a non-crimp fabric can be exemplified.

Next, a low-adhesion reinforcing fiber prepreg will be explained using Fig. 2. A low-adhesion reinforcing fiber prepreg 2 is composed of a low-adhesion part (low-adhesion region) 21 and an ordinary part 22. The low-adhesion part 21 is a low-adhesion region that has reduced adhesiveness by applying adhesiveness reduction treatment as compared with the ordinary part 22. The resin reaction rate of the low-adhesion part 21 is preferably 0.1% to 20%, more preferably 0.1% to 15%, with respect to the resin reaction rate of the ordinary part 22, for example.

In the present invention, the resin reaction rate of the matrix resin composition (hereinafter, also simply referred to as "resin reaction rate") means a resin reaction rate of a resin (for example, an epoxy resin) in a matrix resin composition contained in the low-adhesion part 21 of the low-adhesion reinforcing fiber prepreg 2. The resin reaction rate of the matrix resin composition can be calculated by measuring a calorific value for curing by differential scanning calorimetry (DSC). Concretely, it can be calculated from the calorific value for curing of the matrix resin composition (E0) and the calorific value for curing of the resin contained in the prepreg (E1) by the following equation.

$$\text{Resin reaction rate of matrix resin composition (\%)} = \{(E0 - E1) / E0\} \times 100$$

If the resin reaction rate exceeds 20%, the prepreg becomes too rigid and cannot pass through a process in some cases.

Further, as shown in Fig. 2, with respect to the existence position and shape of the low-adhesion part 21, it may be present at a part of the low-adhesion reinforcing fiber prepreg 2, and its concrete existence position and shape are not particularly limited. For example, as shown in (a) of Fig. 2, a shape in which the peripheral portions of the upper and lower surfaces of the low adhesion reinforcing fiber prepreg 2 are low-adhesion parts 21 can be exemplified. Further, as shown in (b) of Fig. 2, a shape in which the end surface of the low adhesion reinforcing fiber prepreg 2 is the low-adhesion part 21 can be exemplified. Furthermore, as shown in (c) of Fig. 2, a shape in which the upper and lower surfaces of the low-adhesion reinforcing fiber prepreg 2 are the low-adhesion parts 21 can be exemplified. By providing the low-adhesion part at the position exemplified above, for example, the contact portion between the cutting device and the reinforcing fiber prepreg becomes a low-adhesion part, which can improve the conveyance of the reinforcing fiber prepreg. Further, as a shape of the low-adhesion part, a dot shape, a stripe shape extending in the longitudinal direction, the lateral direction or the oblique direction, or the like can also be exemplified.

Next, the end portion shape changing reinforcing fiber prepreg will be explained using Fig. 3. An end portion shape changing reinforcing fiber prepreg 3 is composed of a shape-changed end portion 31 and an ordinary part 32.

The shape of the end portion 31 is not particularly limited as long as the thickness is partially reduced with respect to the ordinary part 32. For example, as shown in (a) of Fig. 3, a shape in which the cross-sectional shape of the end portion is an ellipse can be exemplified. Further, as shown in (b) of Fig. 3, a shape in which the cross-sectional shape of the end portion is a $\Sigma$ shape can be exemplified. Furthermore, as shown in (c) of Fig. 3, a shape in which the cross-sectional shape of the end portion is a $\Delta$ shape can be exemplified. Further, it is important that a cross-sectional area of both end portions each occupying a region (the width 33 of the end portion) entered from each end by 10% of a maximum width (the width 34 of the reinforcing fiber prepreg) in a cross section perpendicular to the longitudinal direction of the reinforcing fiber prepreg tape is less than 15% of the entire cross-sectional area of the cross section perpendicular to the longitudinal direction of the reinforcing fiber prepreg tape.

If it is 15% or more, there is a possibility that inconvenience in the conveyance process may happen such as that the contact area increases at the contact position of the device and the end portion of the reinforcing fiber prepreg tape, and fluffs and resin adhere to the device from the end portion of the reinforcing fiber prepreg tape.

Further, it is also possible to apply an adhesiveness reduction treatment to the end portion 31 as described above. The resin reaction rate of the end portion 31 is preferably 0.1% to 20%, more preferably 0.1% to 15%, with respect to the resin reaction rate of the ordinary part 32, for example.

The adhesiveness reduction treatment does not limit mechanism and formation as long as it can reduce adhesiveness. For example, at least one of heat treatment, plasma irradiation treatment, and UV irradiation treatment can be exemplified.

In order to reduce the resin adhesion to the heating mechanism, the energy utilized for the treatment is preferably in the form of propagating in a space, and UV irradiation is particularly preferable from the viewpoint of easy energy control.

Fig. 4 shows an embodiment of a method for producing a reinforcing fiber prepreg tape in which a low adhesion reinforcing fiber prepreg 2 is cut by a slitter 4 (slit blade) along its low-adhesion part 21, and shows (a) a schematic perspective view, (b) a schematic plan view, and (c) a schematic front sectional view, respectively.

By providing a plurality of mechanisms for performing the aforementioned adhesiveness reduction treatment at desired intervals and treating them, it is possible to obtain a low-adhesion reinforcing fiber prepreg 2 having a plurality of low-adhesion parts 21 arranged in parallel as shown in Fig. 4.

The slitter 4 is not limited with the configuration of the cutting mechanism and the slitter 4 as long as it can slit along the low-adhesion part 21 of the low-adhesion reinforcing fiber prepreg 2. For example, a shear cutter or a score cutter can be exemplified.

Fig. 5 shows an embodiment of a wound body 5 of a reinforcing fiber prepreg in which a part of the reinforcing fiber prepreg is a low-adhesion region to which an adhesiveness reduction treatment has been applied, and shows (a) a schematic perspective view, and (b) a schematic elevational view, respectively. The wound body 5 of the low-adhesion reinforcing fiber prepreg is one made into a bobbin shape by winding the low-adhesion reinforcing fiber prepreg 2 described above. It is a configuration in which the low-adhesion reinforcing fiber prepreg 2 is subsequently wound directly onto an outer layer of the low-adhesion reinforcing fiber prepreg 2 which has been wound previously. By forming such a wound body 5, it is possible to omit a film being inserted which was conventionally indispensable, and it is possible to save the cost by the cost of the film being inserted.

Subsequently, an example of a method for producing a reinforcing fiber prepreg tape characterized by cutting along a low-adhesion region of a reinforcing fiber prepreg according to the present invention will be explained with reference to Fig. 4.

First, the reinforcing fiber prepreg 1 is prepared. In consideration of the width of the final cutting, adhesiveness reduction treatment is performed with respect to the region through which the slitter 4 passes. At this time, it is possible to prepare a shield which does not transmit the processing energy to the area where adhesiveness reduction treatment is not performed. With the shape of the shield, for example, by providing a plurality of holes, it is possible to perform a low adhesiveness treatment in a spot shape, or a low adhesiveness treatment in a stripe shape can be performed by providing a slit. If the temperature is temporarily elevated at the time of the adhesiveness reduction treatment, the resin of the reinforcing fiber prepreg 1 softens by a high temperature and the adhesiveness temporarily increases, and therefore, in case of a high-temperature reinforcing fiber prepreg 1, a way, wherein the reinforcing fiber prepreg 1 and the cutting device do not make physical contact, is desired. In case where the physical contact is inevitable, it is desirable to cool the reinforcing fiber prepreg 1 until the adhesiveness decreases before contact with the cutting device. Further, as the adhesiveness reduction treatment, at least one of heat treatment, plasma irradiation treatment, and UV irradiation treatment can be exemplified. By controlling the treatment time and treatment energy, it is possible to control the shape and thickness of the adhesiveness reduction treatment region in the thickness direction of the reinforcing fiber prepreg 1.

Subsequently, the low-adhesion part 21 of the low-adhesion reinforcing fiber prepreg 2 having been subjected to the adhesiveness reduction treatment is cut so as to pass through the slitter 4. As the kind of blade used for cutting, a blade for shear cutting or a blade for score cutting can be used.

Examples

Hereinafter, the present invention will be explained more concretely based on examples, but the present invention is not limited by these examples at all. Further, the materials used in each example and comparative example, and various measurement and evaluation methods are shown below.

[material]

(Prepreg)

A prepreg "T800H/3900-2" supplied by Toray Industries, Inc. (reinforcing fiber: carbon fiber, thermosetting matrix resin: epoxy resin) was prepared. This prepreg had an areal weight of carbon fibers (CF) of 190 g/m$^2$ and a resin content of 35.5% by weight. The average single fiber diameter of the carbon fiber T800H-12K is 5 $\mu$m, and the tensile strength is 560 kgf/mm$^2$. However, this material is merely an example of a preferred embodiment of the present invention, and the present invention is not limited to these materials.

[Measurement/Evaluation Method]

(Measurement of resin reaction rate of matrix resin composition)

The matrix resin composition contained in the semi-cured prepregs obtained in Examples 1 to 3 or Comparative Example 2 described later was referred to as a semi-cured resin and the residual calorific value (E1) of this semi-cured resin and the calorific value for curing (E0) of the uncured matrix resin composition were measured using a DSC Q 2000 manufactured by TA Instrument Corporation under conditions of a temperature elevation rate of 5°C/min and a temperature range of -70°C to 300°C. The resin reaction rate of the matrix resin composition was determined from the following equation. Where, in Comparative Example 1, since the prepreg was not cured, an uncured prepreg having a matrix reaction composition of 0% resin reaction rate was used.

$$\text{Resin reaction rate (\%) of matrix resin composition} = \{(E0 - E1) / E0\} \times 100$$

(Evaluation of Adhesiveness)

Each of the reinforcing fiber prepregs described in Examples and Comparative Examples described later was placed at a stationary condition onto a metal plate at a room temperature, and pressed from the above thereof for 1 second so as to become 0.05 MPa. Thereafter, if the metal plate and the reinforcing fiber prepreg were adhered, it was determined to be "x", and if not adhered, it was determined to be "O".

(Evaluation of bendability)

Each of the reinforcing fiber prepregs shown in Examples and Comparative Examples described later was cut out to obtain a sample having a length of 100 mm and a width of 15 mm. The sample was bent, one capable of having achieved an end-to-end distance of 40 mm was determined to be "○", and one having broken halfway was determined to be "x".

[Example 1]

In Example 1, a reinforcing fiber prepreg with a resin reaction rate of 0.1% was used. As the method for adhesiveness reduction treatment, heat treatment was used. A test piece (15 mm in width and 300 mm in length) was placed in an oven at 60°C, and the resin was reacted until the resin reaction rate became 0.1%. It was placed at a stationary condition onto a metal plate at a room temperature, and then pressed from the above thereof for 1 second so as to become 0.05 MPa. Thereafter, when observing the metal plate and the reinforcing fiber prepreg, they did not adhere. Subsequently, the reinforcing fiber prepreg was cut out to obtain a sample having a length of 100 mm and a width of 15 mm. When the sample was bent, the distance between the end portions could be made 40 mm.

[Example 2]

In Example 2, a reinforcing fiber prepreg with a resin reaction rate of 7.3% was used. As the method for adhesiveness reduction treatment, heat treatment was used. A test piece (15 mm in width and 300 mm in length) was placed in an oven at 60°C, and the resin was reacted until the resin reaction rate became 7.3%. It was placed at a stationary condition onto a metal plate at a room temperature, and then pressed from the above thereof for 1 second so as to become 0.05 MPa. Thereafter, when observing the metal plate and the reinforcing fiber prepreg, they did not adhere. Subsequently, the reinforcing fiber prepreg was cut out to obtain a sample having a length of 100 mm and a width of 15 mm. When the sample was bent, the distance between the end portions could be made 40 mm.

[Example 3]

In Example 3, a reinforcing fiber prepreg with a resin reaction rate of 14.5% was used. As the method for adhesiveness reduction treatment, heat treatment was used. A test piece (15 mm in width and 300 mm in length) was placed in an oven at 60°C, and the resin was reacted until the resin reaction rate became 14.5%. It was placed at a stationary condition onto a metal plate at a room temperature, and then pressed from the above thereof for 1 second so as to become 0.05 MPa. Thereafter, when observing the metal plate and the reinforcing fiber prepreg, they did not adhere. Subsequently, the reinforcing fiber prepreg was cut out to obtain a sample having a length of 100 mm and a width of 15 mm. When the sample was bent, the distance between the end portions could be made 40 mm.

[Comparative Example 1]

In Comparative Example 1, a reinforcing fiber prepreg which was uncured and had a resin reaction rate of 0% was used. It was placed at a stationary condition onto a metal plate at a room temperature, and then pressed from the above thereof for 1 second so as to become 0.05 MPa. Thereafter, when observing the metal plate and the reinforcing fiber prepreg, they adhered to each other. Subsequently, the reinforcing fiber prepreg was cut out to obtain a sample having a length of 100 mm and a width of 15 mm. When the sample was bent, it was possible to make the distance between the end portions could be made 40 mm.

[Comparative Example 2]

In Comparative Example 2, a reinforcing fiber prepreg with a resin reaction rate of 28.2% was used. As the method for adhesiveness reduction treatment, heat treatment was used. A test piece (15 mm in width and 300 mm in length) was placed in an oven at 60°C, and the resin was reacted until the resin reaction rate became 28.2%. It was placed at a stationary condition onto a metal plate at a room temperature, and then pressed from the above thereof for 1 second so as to become 0.05 MPa. Thereafter, when observing the metal plate and the reinforcing fiber prepreg, they did not adhere. Subsequently, the reinforcing fiber prepreg was cut out to obtain a sample having a length of 100 mm and a width of 15 mm. When the sample was bent, the distance between the end portions could not be made 40 mm.

Table 1 shows the resin reaction rates and evaluation results of Examples 1 to 3 and Comparative Examples 1 and 2.

Table 1

|  | Resin reaction rate (%) | Evaluation of adhesiveness | Evaluation of bendability |
|---|---|---|---|
| Comparative Example 1 | 0 | × | ○ |
| Example 1 | 0.1 | ○ | ○ |
| Example 2 | 7.3 | ○ | ○ |
| Example 3 | 14.5 | ○ | ○ |
| Comparative Example 2 | 28.2 | ○ | × |

As shown in Table 1, in Examples 1 to 3 to which the adhesiveness reduction treatment according to the present invention was applied, the adhesiveness was appropriately reduced, and good bendability was obtained.

Industrial Applicability

In the low-adhesion reinforcing fiber prepreg according to the present invention, the conveyance process of AFP is facilitated, and this low-adhesion reinforcing fiber prepreg can be suitably applied to AFP (Automatic Fiber Placement) used in the aircraft industry and the automobile industry.

Explanation of symbols

1: reinforcing fiber prepreg
2: low-adhesion reinforcing fiber prepreg

    21: low-adhesion part
    22: ordinary part

3: end portion shape changing reinforcing fiber prepreg

    31: end portion
    32: ordinary part
    33: width of end portion
    34: width of end portion shape changing reinforcing fiber prepreg

4: slitter
5: wound body of low-adhesion reinforcing fiber prepreg

**Claims**

1. A reinforcing fiber prepreg having a thermosetting resin as a matrix, wherein a part of the reinforcing fiber prepreg is a low-adhesion region to which an adhesiveness reduction treatment has been applied.

2. The reinforcing fiber prepreg according to claim 1, wherein a resin reaction rate of the low-adhesion region is 0.1% to 20%.

3. The reinforcing fiber prepreg according to claim 1 or 2, wherein the adhesiveness reduction treatment is at least one of heat treatment, plasma irradiation treatment and UV irradiation treatment.

4. The reinforcing fiber prepreg according to any one of claims 1 to 3, wherein a surface of the reinforcing fiber prepreg or the periphery of the surface is the low-adhesion region.

5. The reinforcing fiber prepreg according to any one of claims 1 to 4, wherein an end surface of the reinforcing fiber prepreg is the low-adhesion region.

6. A reinforcing fiber prepreg tape cut along the low-adhesion region provided in the reinforcing fiber prepreg according to any one of claims 1 to 5.

7. A reinforcing fiber prepreg tape using a thermosetting resin as a matrix, wherein a cross-sectional area of both end portions each occupying a region entered from each end by 10% of a maximum width in a cross section perpendicular to the longitudinal direction of the reinforcing fiber prepreg tape is less than 15% of the entire cross-sectional area of the cross section perpendicular to the longitudinal direction of the reinforcing fiber prepreg tape.

8. The reinforcing fiber prepreg tape according to claim 7 cut along the low-adhesion region provided in the reinforcing fiber prepreg according to any one of claims 1 to 5.

9. A wound body of a reinforcing fiber prepreg having a thermosetting resin as a matrix, wherein at least a part of the reinforcing fiber prepreg has a low-adhesion region to which an adhesiveness reduction treatment has been applied, and the reinforcing fiber prepreg is subsequently wound directly onto an outer layer of the reinforcing fiber prepreg which has been wound previously.

10. A method for producing a reinforcing fiber prepreg comprising a step of forming at least a part of a reinforcing fiber prepreg having a thermosetting resin as a matrix into a low-adhesion region by at least one adhesiveness reduction treatment selected from the group consisting of heat treatment, plasma irradiation treatment and UV irradiation treatment.

**11.** The method for producing a reinforcing fiber prepreg according to claim 10, wherein the low-adhesion region is formed at a surface of the reinforcing fiber prepreg or the periphery of the surface.

**12.** A method for producing a reinforcing fiber prepreg tape comprising a step of cutting the tape along the low-adhesion region of a reinforcing fiber prepreg obtained by the production method according to claim 10 or 11.

# FIG. 1

1

FIG. 2

FIG. 3

# FIG. 4

(a)

(b)

(c)

EP 3 556 800 A1

# FIG. 5

(a)

5

(b)

5

## INTERNATIONAL SEARCH REPORT

| International application No. |
|---|
| PCT/JP2017/043949 |

### A. CLASSIFICATION OF SUBJECT MATTER
Int.Cl. C08J5/24(2006.01)i

According to International Patent Classification (IPC) or to both national classification and IPC

### B. FIELDS SEARCHED

Minimum documentation searched (classification system followed by classification symbols)
Int.Cl. C08J5/24

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 61-160230 A (MATSUSHITA ELECTRIC WORKS, LTD.) 19 July 1986, claims, p. 2, upper left column, lines 8-14, examples, fig. (Family: none) | 1-5, 10, 11 |
| X | JP 2016-43580 A (TOYOTA MOTOR CORP.) 04 April 2016, claims, paragraph [0016], examples, drawings (Family: none) | 1-5, 10, 11 |
| X | JP 4-339611 A (SHIN-KOBE ELECTRIC MACHINERY CO., LTD.) 26 November 1992, claims, examples (Family: none) | 1-5, 10, 11 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 February 2018 (26.02.2018) | 13 March 2018 (13.03.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

# EP 3 556 800 A1

## INTERNATIONAL SEARCH REPORT

| International application No. |
|---|
| PCT/JP2017/043919 |

**C (Continuation).    DOCUMENTS CONSIDERED TO BE RELEVANT**

| Category* | Citation of document, with indication, where appropriate, of the relevant passages | Relevant to claim No. |
|---|---|---|
| X | JP 5-269738 A (SUMITOMO BAKELITE CO., LTD.) 19 October 1993, claims, examples (Family: none) | 1-5, 10, 11 |
| X | JP 4-62051 A (SUMITOMO BAKELITE CO., LTD.) 27 February 1992, claims, examples (Family: none) | 1-5, 10, 11 |
| X | JP 3-93839 A (MITSUBISHI GAS CHEMICAL CO., INC.) 18 April 1991, claims, examples & US 5368674 A, claims, examples | 1-5, 10, 11 |
| X | JP 7-171830 A (MITSUBISHI GAS CHEMICAL CO., INC.) 11 July 1995, claims, paragraph [0008], examples (Family: none) | 1-5, 10, 11 |
| X | CD-ROM of the specification and drawings annexed to the request of Japanese Utility Model Application No. 39915/1991 (Laid-open No. 39915/1993) ( SHIN-KOBE ELECTRIC MACHINERY CO., LTD.) 28 May 1993, claims, examples (Family: none) | 1-5, 10, 11 |
| X | JP 2011-36921 A (SHINMAYWA INDUSTRIES, LTD.) 24 February 2011, claims, paragraph [0002], examples, drawings (Family: none) | 7 |
| X | JP 2006-52135 A (GENERAL ELECTRIC CO.) 23 February 2006, claims, examples, drawings & US 2006/0043628 A1, claims, examples, figures & DE 102005037108 A & FR 2874919 A & CN 1749217 A | 7 |
| A | JP 2004-181683 A (KAWASAKI HEAVY INDUSTRIES, LTD.) 02 July 2004, claims, examples, drawings (Family: none) | 1-12 |

Form PCT/ISA/210 (continuation of second sheet) (January 2015)

16

**REFERENCES CITED IN THE DESCRIPTION**

**Patent documents cited in the description**

- JP 2008030296 A
- JP 2016155915 A